# EUROPEAN PATENT SPECIFICATION

(11) **EP 1 578 830 B1**
(45) Date of publication and mention of the grant of the patent: **04.04.2012**
(21) Application number: 03796702.3
(22) Date of filing: 05.12.2003
(51) Int. Cl.: C08G 18/12, C08G 18/28, C09J 175/04, C09D 175/04, C08G 18/48

(54) **MOISTURE-CURABLE, POLYETHER URETHANES WITH TERMINAL CYCLIC UREA/REACTIVE SILANE GROUPS AND THEIR USE AS SEALANTS, ADHESIVES AND COATINGS**
FEUCHTIGKEITSHÄRTENDE POLYETHERURETHANE MIT TERMINALEN CYCLISCHEN HARNSTOFF-/ REAKTIVEN SILANGRUPPEN UND IHRE VERWENDUNG ALS DICHTMATERIALIEN, KLEBSTOFFE UND BESCHICHTUNGEN
URETHANES DE POLYETHER DURCISSABLES A L'HUMIDITE A GROUPES TERMINAUX UREE CYCLIQUES / SILANE REACTIFS ET LEUR UTILISATION EN TANT QU'AGENT D'ETANCHEITE, ADHESIFS ET REVETEMENT

(30) Priority: 20.12.2002 US 325029
(43) Date of publication of application: 28.09.2005
(73) Proprietor: Bayer MaterialScience LLC, Pittsburgh, PA 15205-9741 (US)
(72) Inventor: ROESLER, Richard, R., Wexford, PA 15090 (US); CRAWFORD, Derek, L., Oakdale, PA 15071 (US)
(74) Representative: Bailly, Peter
(86) International application number: PCT/US2003/038710
(87) International publication number: WO 2004/060953

(56) References cited:
- EP-A- 0 807 649
- WO-A-00/26271
- US-B1- 6 265 517

## Description

### FIELD OF THE INVENTION

The present invention relates to moisture-curable polyether urethanes containing terminal cyclic urea/reactive silane groups and prepared from polyether polyols haying a low degree of unsaturation and to the use of these polyether urethanes as sealants, adhesives and coatings.

### BACKGROUND OF THE INVENTION

Polyether urethanes containing reactive silane groups, also referred to as silane-terminated polyurethanes (STPs), and their use as sealants and adhesives are known and described, e.g., in U.S. Patents 5,554,709; 4,85.7,623; 5,227,434 and 6,197,912; and WO 02/06367. The silane-terminated polyurethanes may be prepared by various methods. In one method the silane-terminated polyurethanes are prepared by reacting diisocyanates with polyether polyols to form isocyanate-terminated prepolymers, which are then reacted with aminosilanes to form the silane-terminated polyurethanes. The sealants may also be prepared by reacting unsaturated monools with diisocyanates to form intermediates containing unsaturated end groups and then converting these unsaturated groups to alkoxysilane groups by hydrosilylation. In another method the sealants are prepared in one step by the reaction of polyether diols with isocyanatosilanes

To be useful as sealants the silane-terminated polyurethanes should have a number average molecular weight of 6000 to 20,000. One method of obtaining this molecular weight is to use polyether diols prepared by the KOH process and having a molecular weight of 2000 to prepare the isocyanate-terminated prepolymers. The presence of urethane groups causes the products to have a high viscosity. To achieve suitable application viscosities, the high viscosity is reduced by the addition of higher amounts of plasticizer and lesser amounts of fillers, resulting in more expensive sealant products.

Another method of obtaining high molecular weight sealants is by using high molecular weight polyether diols having a low degree of unsaturation and prepared using special catalysts as described in EP-A 0,546,310, EP-A 0,372,561 and DE-A 19,908,562. When these polyether diols are used, the resulting sealants have excellent tensile strength, but the sealants are too brittle for many applications because the elongation is too low and the 100% modulus is too high.

The preparation of sealants from mixtures of polyfunctional and monofunctional silane-terminated polyurethanes is known and disclosed in U.S. Patents 5,554,709 and 4,857,623 and WO 02/06367. However, these references do not disclose the use of polyether polyols having a low degree of unsaturation and aspartate-functional silanes to prepare the sealants.

The preparation of silane-terminated polyether urethanes from aspartate-functional silanes is disclosed in U.S. Patent 5,364,955 and WO 98/18843. In both of these references the polyethers used to prepare polyether urethanes do not have a low degree of unsaturation. In addition, mixtures of polyfunctional and monofunctional silane-terminated polyurethanes are not disclosed. Finally, in the latter reference the polyethers must contain 15 to 40% by weight of ethylene oxide units.

Also EP-A 0 807 649 discloses the preparation of silane-terminated polyether urethanes comprising cyclic urea groups from aspartate-functional silanes. However, the polyethers used to prepare polyether urethanes as described in this reference do not have a low degree of unsaturation. In addition, mixtures of polyfunctional and monofunctional silane-terminated polyurethanes are not disclosed.

WO 00/26271 discloses the preparation of silane-terminated polyether urethanes from polyether polyols having a low degree of unsaturation and aspartate-functional silanes. The products are prepared by reacting diisocyanates with high molecular weight polyether diols to form NCO prepolymers, which are then capped with aspartate-functional silanes to form silane-terminated polyether urethanes. This application does not disclose mixtures of disilane-terminated polyether urethanes with polyether urethanes containing one reactive silane group.

U.S. Patent 6,265,517 describes a similar process for preparing silane-terminated polyether urethanes from polyether polyols having a low degree of unsaturation and aspartate-functional silanes. The patent requires the starting polyol to have a monool content of less than 31 mole%, and teaches that a relatively high monool content is highly undesirable because monools react with isocyanates thereby reducing crosslinking and curing of the prepolymer. The patent also requires the aspartate silanes to be prepared from dialkyl maleates in which the alkyl groups each contain more than four carbon atoms.

EP-A 0,372,561 discloses polyether urethanes containing reactive silane groups and prepared from polyether polyols having a low degree of unsaturation. In addition, polyether urethanes containing one reactive silane group are disclosed. This application fails to disclose the use of aspartate-functional silanes to incorporate the reactive silane groups.

Copending applications EP-A 1 678 229, EP-A 1 678 225, EP-A 1 685 171and EP-A 1 678 227, disclose alkoxysilane-functional polyether urethanes containing a mixture of polyether urethanes containing two or more reactive silane groups with polyether urethanes containing one reactive silane group. The polyether urethanes containing two or more reactive silane groups are prepared from high molecular weight polyether polyols having a low degree of unsaturation.

The deficiencies of the preceding sealants were overcome in copending applications EP-A 1 678 226, EP-A 1 678 227, EP-A 1 678 229, EP-A 1 685 171, EP-A 1 678 225 and EP-A 1 678 228, which describe moisture-curable, alkoxysilane-functional polyether urethanes containing both polyether urethanes having two or more reactive silane groups and polyether urethanes having one reactive silane group. The moisture-curable polyether urethanes are suitable for use as sealants, adhesives and coatings which possess high tensile strengths and elongations and have a reduced 100% modulus when compared with existing products.

In the copending applications the polyether urethane component containing two or more reactive silane groups is prepared from high molecular weight polyether polyols having a low degree of unsaturation. In addition, at least a portion of the reactive silane groups present in at least one of the two components are incorporated by the use of silanes containing secondary amino groups.

Copending application EP-A 1 678 227 describes moisture-curable .' polyether urethanes in which the silane groups are incorporated into the polyether urethanes having two or more reactive silane groups by the use of certain aspartate-functional silanes. A disadvantage of these moisture-curable polyether urethanes is that they are not storage stable at moderately elevated temperatures of 50 to 90°C, which may be present in a drum stored in a hot climate.

Accordingly, it is an object of the present invention to provide moisture-curable polyether urethanes that may be cured to provide products which are storage stable at elevated temperatures and also retain all of the valuable properties of the polyether urethanes disclosed in the preceding copending applications, i.e., the products are suitable for use as sealants, adhesives and coatings which possess high tensile strengths and elongations and have a reduced 100% modulus.

This object may be achieved with the moisture-curable polyether urethanes according to the present invention that contain terminal cyclic urea/reactive silane groups.

The present invention is based on the surprising discovery that the non-cyclic urea groups formed by the reaction of isocyanate groups and aspartate silane groups decompose back into the starting components when stored at moderately elevated temperatures. In accordance with the present invention this decomposition is prevented by converting the non-cyclic urea groups into cyclic urea groups, which are thermally stable.

It is surprising that the polyether urethanes obtained according to the present invention can be used to prepare cured resins that possess the same properties as those obtained in accordance with the copending applications because the presence of cyclic urea groups would be expected to result in less flexible cured resins that would not have the same elongation and 100% modulus as cured resins prepared from polyether urethanes containing non-cyclic urea groups.

### SUMMARY OF THE INVENTION

The present invention relates to moisture-curable, polyether urethanes having terminal cyclic urea/reactive silane groups and containing
a) 20 to 100% by weight, based on the weight of a) and b), of a polyether urethane containing two or more terminal cyclic urea/reactive silane groups and one or more polyether segments, wherein the polyether segments have a number average molecular weight of at least 3000 and a degree of unsaturation of less than 0.04 milliequivalents/g, provided that the sum of the number average molecular weights of all of the polyether segments per molecule averages 6000 to 20,000, and wherein the terminal cyclic urea/reactive silane groups correspond to formula VIII and/or IX 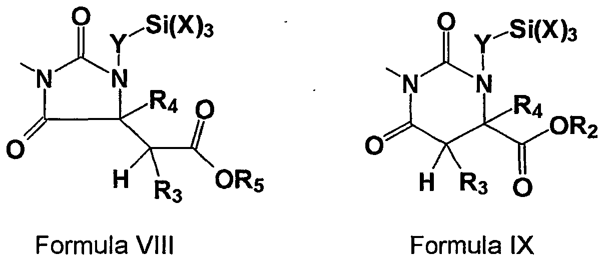 wherein
   - X: represents identical or different organic groups which are inert to isocyanate groups below 100°C, provided that at least two of these groups are alkoxy or acyloxy groups,
   - Y: represents a linear or branched alkylene group containing 1 to 8 carbon atoms,
   - R₂ and R₅: are identical or different and represent organic groups which are inert to isocyanate groups at a temperature of 100°C or less and
   - R₃ and R₄: are identical or different and represent hydrogen or organic groups which are inert towards isocyanate groups at a temperature of 100°C or less, and
b) 0 to 80% by weight, based on the weight of a) and b), of a polyether urethane containing one reactive silane group and one or more polyether segments having a number average molecular weight of 1000 to 15,000.

The present invention also relates to sealant, adhesive and coating compositions containing these polyether urethanes.

### DETAILED DESCRIPTION OF THE INVENTION

In the moisture-curable, polyether urethanes according to the present invention polyether urethanes a) are present in a minimum amount of at least 20% by weight, preferably 30% by weight and more preferably 40% by weight. The maximum amount of polymers a) is 100% by weight, preferably 90% by weight, more preferably 80% by weight and most preferably 70% by weight. Polyether urethanes b) are present in a minimum amount of 0% by weight, preferably 10% by weight, more preferably 20% by weight and most preferably 30% by weight. The maximum amount of polymers b) is 80% by weight, preferably 70% by weight and more preferably 60% by weight. The preceding percentages are based on the total weight of polyether urethanes a) and b).

Suitable polymers for use as component a) include polyether urethanes containing one or more, preferably one, polyether segment having a number average molecular weight of 3000 to 20,000, preferably 6000 to 15,000 and more preferably 8000 to 12,000. When the polyether segments have a number average molecular weight of 3000, for example, then two or more of these segments must be present so that the number average molecular weights of all of the polyether segments per molecule averages 6000 to 20,000. Polymers a) also contain two or more, preferably two, terminal cyclic urea/reactive silane groups. The reactive silane groups are incorporated by the reaction of an isocyanate group with an aspartate silane corresponding to formula I to form a non-cyclic urea/reactive silane group and then converting the non-cyclic urea into a cyclic urea in presence of a catalyst and heat. -

In accordance with the present invention the term "reactive silane group" means a silane group containing at least two alkoxy or acyloxy groups as defined by substituent "X". A silane group containing two or three alkoxy and/or acyloxy groups is considered to be one reactive silane group. Also, a urethane is a compound containing one or more urethane and/or urea groups. These compounds preferably contain one or more urethane groups and may optionally contain urea groups. More preferably, these compounds contain both urethane and urea groups.

Polymers a) may be prepared by several methods. For example, they may be prepared by reacting a high molecular weight polyether containing at least two isocyanate-reactive groups, preferably hydroxyl groups, with an excess of a polyisocyanate, preferably a diisocyanate, to form an NCO prepolymer. The resulting NCO prepolymer is reacted with an aspartate silane corresponding to formula I to form a polyether urethane intermediate containing terminal non-cyclic urea/reactive silane groups, which is then reacted in the presence of a catalyst and heat to form polymers a). Polymers a) may also be prepared by reacting an excess of a polyisocyanate with an aspartate silane to form a monoisocyanate, then reacting the monoisocyanate with a high molecular weight polyether to form a polyether urethane intermediate containing terminal non-cyclic urea/reactive silane groups, which is then reacted in the presence of a catalyst and heat to form polymers a).

The conversion of the non-cyclic urea groups into cyclic urea groups takes place according the following reaction

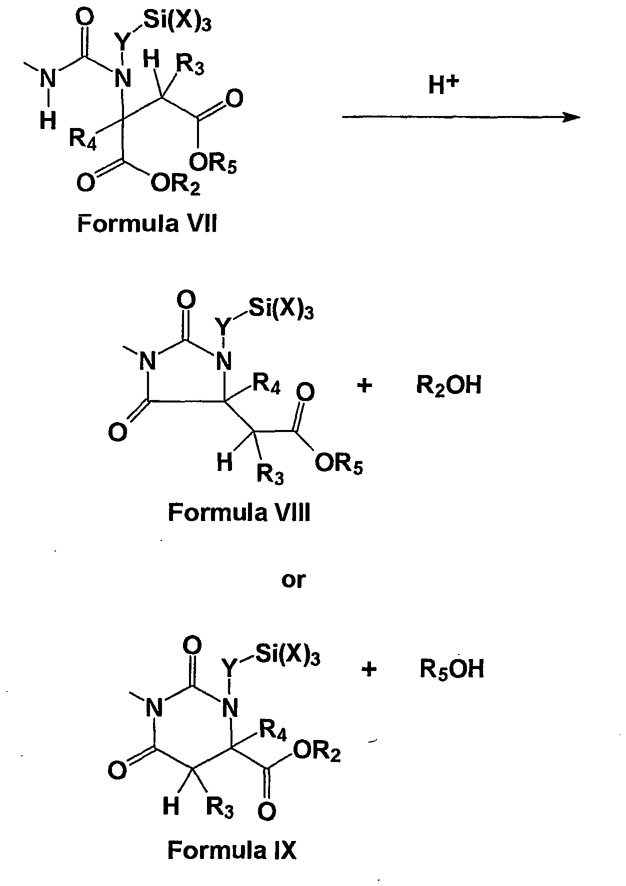

The reaction is carried out in the presence of a catalyst and heat. Suitable catalysts are Brønsted acids, such as mineral acids, carboxylic acids, sulfonic acids and phenols. Preferred catalysts are carboxylic acids, such as formic acid, acetic acid, propionic acid, 2-ethyl hexanoic acid, malonic acid, phthalic acid, and 1,2,3-tricarboxytic propane. Especially preferred are acetic acid and 2-ethyl hexanoic acid.

Higher temperatures accelerate the conversion of the non-cyclic urea groups into cyclic urea groups. Suitable reaction temperatures are from 50 to 200°C. Very low temperatures require long reaction times and result in a very yellow product. Very high temperatures require only short reaction times, but also result in yellow products. The preferred range for minimizing the development of the yellow color is from 70 to 130°C, more preferably from 90 to 120°C and most preferably from 100 to 120°C.

The conversion of non-cyclic urea groups into cyclic urea groups is accompanied by the release of a mole of alcohol from the succinyl ester. The generated alcohol and the catalyst can be removed from the reaction mixture, for example, by vacuum distillation, or they can be left in the product. If left in the product the released alcohols may undergo a transetherication reaction with the alkoxy groups on the silane. Whether the released alcohols are removed or not is of no consequence, since the products formed with or without vacuum purification, when formulated into a sealant or adhesive, undergo moisture cure to give cured compositions of equivalent performance.

The transetherification reaction can be used to alter the reactivity of the polyether urethanes according to the invention. For example, if a methoxysilane group is converted to an ethoxysilane group or a butoxysilane group, the reactivity of the resulting alkoxysilane groups will be substantially reduced. To the contrary if an ethoxysilane group or a butoxysilane group is converted to a methoxysilane group, the reactivity of the resulting alkoxysilane groups will be substantially increased.

Suitable aspartate silanes for prepareing polymers a) are those corresponding to formula I 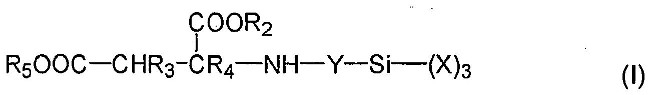 wherein
- X: represents identical or different organic groups which are inert to isocyanate groups below 100°C, provided that at least two of these groups are alkoxy or acyloxy groups, preferably alkyl or alkoxy groups having 1 to 4 carbon atoms and more preferably alkoxy groups,
- Y: represents a linear or branched alkylene group containing 1 to 8 carbon atoms, preferably a linear group containing 2 to 4 carbon atoms or a branched group containing 5 to 6 carbon atoms, more preferably a linear group containing 3 carbon atoms and
- R₂ and: R₅are identical or different and represent organic groups which are inert to isocyanate groups at a temperature of 100°C or less, preferably alkyl groups having 1 to 9 carbon atoms, more preferably alkyl groups having 1 to 4 carbon atoms, such as methyl, ethyl or butyl groups and
- R₃ and R₄: are identical or different and represent hydrogen or organic groups which are inert towards isocyanate groups at a temperature of 100°C or less, preferably hydrogen.

Especially preferred are compounds in which X represents methoxy, ethoxy groups or propoxy groups, more preferably methoxy or ethoxy groups, and Y is a linear group containing 3 carbon atoms.

The compounds of formula I are prepared by reacting aminosilanes corresponding to formula II

H₂N-Y-Si-(X)3 (II)

with maleic or fumaric acid esters corresponding to formula III

R₅OOC -CR₃=CR₄-COOR₂ (III)

Examples of suitable aminoalkyl alkoxysilanes and aminoalkyl acyloxysilanes corresponding to formula II include 3-aminopropyl-triacyloxysilane, 3-aminopropyl-methyldimethoxysilane; 6-aminohexyl-tributoxysilane; 3-aminopropyl-trimethoxysilane; 3-aminopropyl-triethoxysilane; 3-aminopropyl-methyldiethoxysilane; 5-aminopentyl-trimethoxysilane; 5-aminopentyl-triethoxysilane; 4-amino-3,3-dimethylbutyl-trimethoxysilane; and 3-aminopropyl-triisopropoxysilane. 3-aminopropyl-trimethoxysilane and 3-aminopropyl-triethoxysilane are particularly preferred.

Examples of optionally substituted maleic or fumaric acid esters suitable for preparing the aspartate silanes include the dimethyl, diethyl, dibutyl (e.g., di-n-butyl), diamyl, di-2-ethylhexyl esters and mixed esters based on mixture of these and/or other alkyl groups of maleic acid and fumaric acid; and the corresponding maleic and fumaric acid esters substituted by methyl in the 2- and/or 3-position. The dimethyl, diethyl and dibutyl esters of maleic acid are preferred, while the diethyl esters are especially preferred.

The reaction of primary amines with maleic or fumaric acid esters to form the aspartate silanes of formula III is known and described, e.g., in U.S. Patent 5,364,955.

Suitable polyisocyanates which may be used to prepare polymers a) are known and include monomeric organic diisocyanates represented by the formula, R(NCO)₂, in which R represents an organic group obtained by removing the isocyanate groups from an organic diisocyanate having a molecular weight of 112 to 1,000, preferably 140 to 400. Preferred diisocyanates are those represented by the above formula in which R represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms or a divalent aromatic hydrocarbon group having 6 to 15 carbon atoms.

Examples of suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis-(4-isocyanato-cydohexyl)-methane, 1,3- and 1,4-bis-(isocyanatomethyl)-cyclohexane, bis-(4-iso-cyanatocyclo-hexyl)-methane, 2,4'-diisocyanato-dicyclohexyl methane, bis-(4-isocyanato-3-methyl-cyclohexyl)-methane, α,α,α',α'-tetramethyl-1,3-and/or -1,4-xylylene diisocyanate, 1-isocyanato-1-methyl-4(3)-isocyanatomethyl cyclohexane, 2,4- and/or 2,6-hexahydro-toluylene diisocyanates, 1,3- and/or 1,4-phenylene diisocyanate, 2,4- and/or 2,6-toluylene diisocyanate, 2,4- and/or 4,4'-diphenylmethane diisocyanate and 1,5-diisocyanato naphthalene and mixtures thereof.

Monomeric polyisocyanates containing 3 or more isocyanate groups such as 4-isocyanatomethyl-1,8-octamethylene diisocyanate and aromatic polyisocyanates such as 4,4',4"-triphenylmethane triisocyanate and polyphenyl polymethylene polyisocyanates obtained by phosgenating aniline/formaldehyde condensates may also be used. Also suitable, although less preferred, are polyisocyanate adducts prepared from the preceding monomeric polyisocyanates and containing isocyanurate, uretdione, biuret, urethane, allophanate, iminooxadiazine dione, carbodiimide and/or oxadiazinetrione groups.

Preferred diisocyanates include bis-(4-isocyanatocyclohexyl)-methane, 1,6-hexamethylene diisocyanate, isophorone diisocyanate, α,α,α',α'-tetramethyl-1,3- and/or -1,4-xylylene diisocyanate, 2,4- and/or 2,6-toluylene diisocyanate, and 2,4- and/or 4,4'-diphenylmethane diisocyanate. Especially preferred are isophorone diisocyanate, 2,4-toluylene diisocyanate and mixtures of 2,4- and 2,6-toluylene diisocyanate.

Suitable polyols for preparing polymers a) are polyether polyols, in some cases polyoxypropylene polyols, in many instances diols, having a number average molecular weight of 3000 to 20,000, preferably 6000 to 15,000, and more preferably 8000 to 12,000. The polyethers can have a maximum total degree of unsaturation of less than 0.04 milliequivalents/g, in some cases less than 0.02 meq/g (meq/g), in other cases less than 0.01 meq/g and in some situations 0.007 meq/g or less. The amount of unsaturation will vary depending on the method used to prepare the polyether as well as the molecular weight of the polyerther.. Such polyether diols are known and can be produced, as a non-limiting example, by the propoxylation of suitable starter molecules. As another non-limiting example, minor amounts (up to 20% by weight, based on the weight of the polyol) of ethylene oxide can be used. If ethylene oxide is used, it can be used as the initiator for or to cap the polypropylene oxide groups. Non-limiting examples of suitable starter molecules include diols such as ethylene glycol, propylene glycol, 1,3-butanediol, 1,4-butanediol, 1,6 hexanediol and 2-ethylhexanediol-1,3. Also suitable are polyethylene glycols and polypropylene glycols.

Suitable methods for preparing polyether polyols are known and are described, for example, in EP-A 283 148, US-A 3,278,457, US-A 3,427,256, US-A 3,829,505, US-A 4,472,560. US-A 3,278,458, US-A 3,427,334, US-A 3,941,849, US-A 4,721,818, US-A 3,278,459, US-A 3,427,335 and US-A 4,355,188. They are preferably prepared using double metal cyanides as catalysts.

In addition to the polyether polyols, minor amounts (up to 20% by weight, based on the weight of the polyol) of low molecular weight dihydric and trihydric alcohols having a molecular weight 32 to 500 can also be used. Suitable examples include ethylene glycol, 1,3-butandiol, 1,4-butandiol, 1,6-hexandiol, glycerine or trimethylolpropane. However, the use of low molecular weight alcohols is less preferred.

It is also possible in accordance with the present invention to use aminopolyethers instead of the polyether polyols. The aminopolyethers may be prepared by aminating the corresponding polyether polyols in known manner.

When preparing polymers a) from a diisocyanate, a diol and an aspartate silane, the diisocyanate is reacted with the diol at an equivalent ratio of isocyanate groups to hydroxyl groups of approximately 2:1 to form an NCO prepolymer. In addition to the 2/1 adduct of the diisocyanate and diol, minor amounts of higher molecular weight oligomers are also formed, such as the 3/2 adduct, etc. When these oligomers are formed, the reaction mixture also contains a minor amount of unreacted diisocyanate, which can be removed, e.g., by distillation, or which can remain in the reaction mixture. -

The NCO prepolymer is then reacted with the aspartate silane at an equivalent ratio of isocyanate groups to amino groups of approximately 1:1. The resulting polyether urethane intermediate a) contains the reaction products of the NCO prepolymers with the aspartate silanes and optionally polymers c), which are the reaction products of monomeric diisocyanates with the aspartate silanes. Polymers c) are preferably present in an amount of less then 2% by weight, more preferably less than 1 % by weight, based on the weight of polyether urethane a). When polymers c) are present, they are preferably present in an amount of at least 0.1 % by weight, more preferably at least 0.5% by weight, based on the weight of polyether urethane a).

Similarly to polymers a), polymers b) also contain one or more polyether segments, but they only contain one reactive silane group. Polymers b) may be prepared by several methods. For example, they may be prepared by reacting a high molecular weight polyether containing one isocyanate-reactive group, preferably a hydroxyl group, with an excess of a polyisocyanate, preferably a diisocyanate. The amount of the isocyanate and polyether is chosen such that the resulting product contains one isocyanate group.

For example, when reacting a diisocyanate with a monool using equimolar mixtures of the reactants, the resulting product contains an average of one isocyanate group. In addition to the monoisocyanate intermediate, which is the 1/1 adduct of the monool and diisocyanate, the reaction mixture also contains minor amounts of non-functional polymers d), which are formed by the reaction of two molecules of the monool with one molecule of the diisocyanate. The reaction mixture may also contain a minor amount of unreacted diisocyanate, which can be removed, e.g., by distillation, or which can remain in the reaction mixture.

In accordance with the present invention it is also possible to react additional quantities of the monool with the diisocyanate. When the reaction is carried out in this manner, additional amounts of non-functional polymers d) are formed. These polymers remain in the reaction mixture and function as Plasticizers during the subsequent use of the moisture-curable, polyether urethanes according to the invention.

The reaction mixture containing the monoisocyanate intermediate is reacted with a compound containing an isocyanate-reactive group, preferably an -NH group, and one or more, preferably one reactive silane group to form polyether urethane b). The reaction mixture also contains polymers e), which are the reaction products of any monomeric diisocyanates present in the reaction mixture with the isocyanate-reactive silanes. Polymers e) are considered a part of polyether urethane b), even though they contain two reactive silane groups.

Non-functional polymers d) are preferably present in an amount of less than 60% by weight, more preferably less than 30% by weight and most preferably less than 10% by weight, based on the weight of polyether urethane b). When polymers d) are present, they are preferably present in an amount of at least 0.1 % by weight, more preferably at least 0.5% by weight.

Polymers e) are preferably present in an amount of less then 2% by weight, more preferably less than 1 % by weight, based on the weight of polyether urethane b). When polymers e) are present, they are preferably present in an amount of at least 0.1 % by weight and more preferably at least 0.5% by weight, based on the weight of polyether urethane a).

Polymers b) may also be prepared by reversing these steps and reacting an excess of a polyisocyanate with an isocyanate-reactive silane and then reacting the resulting intermediate with the high molecular weight polyether. Mixtures of polymers b), d) and e) will also be formed when the process steps are carried out in this order.

Suitable polyisocyanates for preparing the polymers b) are those previously set forth as suitable for preparing polymers a). Monomeric diisocyanates are preferred. Also suitable are the difunctional NCO prepolymers previously set forth for preparing polymers a). If the NCO prepolymer contains high molecular weight polyether segments, then low molecular weight monoois can also be used to prepare the previously described monoisocyanate intermediates.

Suitable monools for preparing polymers b) are polyether monools having a number average molecular weight of 1000 to 15,000, preferably 3000 to 12,000 and more preferably 6000 to 12,000. The polyether monools are prepared by the alkoxylation of monofunctional starting compounds with alkylene oxides, preferably ethylene oxide, propylene oxide or butylene oxide, more preferably propylene oxide. If ethylene oxide is used, it is used in an amount of up to 40% by weight, based on the weight of the polyether. The polyethers are preferably prepared either by the KOH process or by mixed metal cyanide catalysis. The latter process results in products with low a degree of unsaturation.

In many cases, the polyethers, which as a non-limiting example can be polypropylene oxide polyethers have a maximum total degree of unsaturation of less than 0.04 milliequivalents/g (meq/g) in some cases less than 0.02 meq/g, in other cases less than 0.01 meq/g and in some situations 0.007 meq/g or less. The amount of unsaturation will vary depending on the method used to prepare the polyether as well as the molecular weight of the polyerther.. Such polyether monools are known and can be produced, as a non-limiting example by the methods set forth previously for preparing polyethers, a non-limiting example being the polyoxypropylene polyols by the propoxylation of suitable starter molecules. In another non-limiting example, minor amounts (up to 20% by weight, based on the weight of the polyol) of ethylene oxide can also be used. As with the polyethers a-i), if ethylene oxide is used, it can be used as the initiator for or to cap the polypropylene oxide groups.

Examples of suitable starter molecules include aliphatic, cycloaliphatic and araliphatic alcohols, phenol and substituted phenols, such as methanol, ethanol, the isomeric propanols, butanols, pentanols and hexanols, cyclohexanol and higher molecular weight compounds such as nonylphenol, 2-ethylhexanol and a mixture of C₁₂ to C₁₅, linear, primary alcohols (Neodol 25, available from Shell). Also suitable are unsaturated alcohols such as allyl alcohol; and hydroxy functional esters such as hydroxyethyl acetate and hydroxyethyl acrylate. Preferred are the higher molecular weight monohydroxy compounds, especially nonyl phenol and mixtures of C₁₂ to C₁₅, linear, primary alcohols.

It is also possible in accordance with the present invention to use monoaminopolyethers instead of the polyether monools. These aminopolyethers may be prepared by aminating the corresponding polyether monools in known manner.

Suitable isocyanate-reactive silanes for use in preparing polymers b) by the preceding processes include those corresponding to the formula 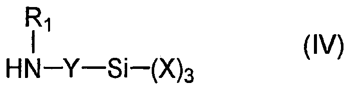 wherein
- X and Y: are as previously defined and
- R₁: represents hydrogen or an organic group which is inert to isocyanate groups at a temperature of 100°C or less, preferably hydrogen or an alkyl, cycloalkyl or aromatic group having 1 to 12 carbon atoms and more preferably an alkyl, cycloalkyl or aromatic group having 1 to 8 carbon atoms, or R₁ represents a group corresponding to formula V

-Y-S i-(X)₃ (V)

Examples of suitable aminoalkyl alkoxysilanes and aminoalkyl acyloxysilanes of formula IV, which contain primary amino groups, are the compounds of formula II that have previously been described as suitable for preparing the aspartate silanes of formula I.

Examples of suitable aminoalkyl alkoxysilanes and aminoalkyl acyloxysilanes of formula IV, which contain secondary amino groups, include the previously disclosed aspartate silanes corresponding to formula I and also N-phenylaminopropyl-trimethoxysilane (available as A-9669 from OSI Corporation), bis-(γ-trimethoxysilylpropyl)amine (available as A-1170 from OSI Corporation), N-cyclohexylaminopropyl-triethoxy-silane, N-methylaminopropyl-trimethoxysilane, N-butylaminopropyl-trimethoxysilane, N-butylaminopropyl-triacyloxysilane, 3-(N-ethyl)amino-2-methylpropyl-trimethoxysilane, 4-(N-ethyl)amino-3,3-dimethylbutyl-trimethoxysilane and the corresponding alkyl diethoxy, alkyl dimethoxy and alkyl diacyloxysilanes, such as 3-(N-ethyl)amino-2-methylpropyl-methyldimethoxysilane.

It is also possible to prepare polymers b) by reacting the polyether in one step with a compound containing isocyanate and alkoxysilane groups corresponding to formula VI

OCN-Y-Si-(X)₃ (VI)

wherein X and Y are as previously defined.

Examples of suitable isocyanatosilanes include 3-isocyanatopropyl-methyldimethoxysilane, 3-isocyanatopropyl-trimethoxysilane and 3-isocyanatopropyl-triethoxysilane. 3-isocyanatopropyl-trimethoxysilane (Silquest Y-5187, available from OSI Corporation) is especially preferred.

When the compounds of formula VI are reacted with a polyether monool to prepare polymers b), then polymers c) and d) are not formed.

Instead of using an aminosilane, it is also possible to prepare polyether urethanes b) by using the hydroxy compound obtained by reacting an aminosilane with a cyclic carbonate such as ethylene or propylene carbonate. The aminosilane may also be replaced with the corresponding thiosilane or the monofunctional adduct of an isocyanatosilane of formula VI with a diol or a diamine.

In accordance with another embodiment of the present invention it is possible to avoid the need for separately preparing a high molecular weight polyether monool by converting a high molecular weight polyether diol into a monool by reacting it with a monoisocyanate. A further alternative for preparing a polyether monool is to react one mole of a diol with a monoacid chloride. Another method for preparing a high molecular weight monool is to react one mole of a monool and one mole of a diol with one mole of a diisocyanate. Either or both of the monool and diol may contain high molecular weight polyether segments. The polyether monools obtained from these processes can then be used to prepare polymers b) using the previously described processes.

If two moles of a diisocyanate are used in the last process, then the resulting product is a monoisocyanate that can be reacted with an isocyanate-reactive compound containing an alkoxysilane group to form polymers b). Another method for forming this monoisocyanate is to react an NCO prepolymer, such as those previously described for preparing polymers a), with a monoalcohol.

The polyether monoamines, which have also been described as suitable for preparing polymers b), can be reacted in the same manner as the polyether monools. In addition, they can also be reacted with epoxy silanes to form polymers b).

In another embodiment a polyether monool is prepared by the alkoxylation of a hydroxyalkyl (meth)acrylate. The resulting polyether monool is reacted with a monoisocyanate to form an unsaturated intermediate. This intermediate is then reacted with an aminosilane or a thiosilane to incorporate silane groups by a Michael addition.

In accordance with a final embodiment of the present invention it is possible to prepare polyether urethanes a) and b) in one step by reacting a mixture of polyether monools and polyether diols with the diisocyanates. Preferably, one mole of diisocyanate is present for each equivalent of hydroxyl groups. The resulting product contains a mixture of NCO prepolymers, monoisocyanate intermediates, non-functional polymers d) and unreacted diisocyanate. The reaction mixture is then reacted with the aspartate silane, which is required to prepare polyether urethanes a), to form a mixture of polyether urethane intermediates a) and b), non-functional polymers d) and polymers c) and e).

When aspartate silane groups are reacted with isocyanate groups to form polymers b), a polyether urethane intermediate is obtained which contains terminal non-cyclic urea/reactive silane groups. These terminal groups can be converted to cyclic urea/reactive silane groups in the same manner as previously described for polymers a). It is also possible in accordance with the present invention to mix the polyether urethane intermediates for polymers a) and b) and convert the non-cyclic urea groups to cyclic urea groups at the same time. The non-cyclic urea groups may also be converted to cyclic urea groups at the same time when the mixture of polyether urethane intermediates is prepared in one step as described in the preceding paragraph.

The compositions of the present invention may be cured in the presence of water or moisture to prepare coatings, adhesives or sealants. The compositions cure by "silane polycondensation" from the hydrolysis of alkoxysilane groups to form Si-OH groups and their subsequent reaction with either Si-OH or Si-OR groups to form siloxane groups (Si-O-Si).

Suitable acidic or basis catalysts may be used to promote the curing reaction. Examples include acids such as paratoluene sulfonic acid; metallic salts such as dibutyl tin dilaurate; tertiary amines such as triethylamine or triethylene diamine; and mixtures of these catalysts. The previously disclosed, low molecular weight, basic aminoalkyl trialkoxy-silanes, also accelerate hardening of the compounds according to the invention.

The one-component compositions generally may be either solvent-free or contain up to 70%, preferably up to 60% organic solvents, based on the weight of the one-component composition, depending upon the particular application. Suitable organic solvents include those which are known from either from polyurethane chemistry or from coatings chemistry.

The compositions may also contain known additives, such as leveling agents, wetting agents, flow control agents, antiskinning agents, antifoaming agents, fillers (such as chalk, lime, flour, precipated and/or pyrogenic silica, aluminum silicates and high-boiling waxes), viscosity regulators, plasticizers, pigments, dyes, UV absorbers and stabilizers against thermal and oxidative degradation.

The one-component compositions may be used with any desired substrates, such as wood, plastics, leather, paper, textiles, glass, ceramics, plaster, masonry, metals and concrete. They may be applied by standard methods, such as spraying, spreading, flooding, casting, dipping, rolling and extrusion.

The one-component compositions may be cured at ambient temperature or at elevated temperatures. Preferably, the moisture-curable compositions are cured at ambient temperatures.

The invention is further illustrated but is not intended to be limited by the following examples in which all pars and percentages are by weight unless otherwise specified.

### EXAMPLES

### Preparation of Silane Functional Aspartate 1

An aspartate resin was prepared according to U.S. Patent 4,364,955. To a 5 liter flask fitted with agitator, thermocouple, nitrogen inlet and addition funnel with condenser were added 1483g (8.27 equivalents) of 3-amino-propyl-trimethoxysilane (Silquest A-1110, available from OSI Corporation). The addition funnel was used to admit 1423.2g (8.27 equivalents) of diethyl maleate over a two hour period. The temperature of the reactor was maintained at 25°C during the addition. The reactor was maintained at 25°C for an additional five hours at which time the product was poured into glass containers and sealed under a blanket of nitrogen. After one week the unsaturation number was 0.6 indicating the reaction was ∼99% complete.

### Polyether diol 1

A polyoxypropylene diol (Acclaim 12200, unsaturation = 0.007 meq/g available from Bayer Corporation) having a functionality of 2 and an equivalent weight of 5783.

### Polyether monool 2

203 g (1.00 eq) of Neodol 25 monool (available from Shell Chemical) were charged to a stainless-steel reactor. Zinc hexacyanocobaltate-tert-butyl alcohol complex (0.143 g, prepared as described in U.S. Patent No. 5,482,908) was added and the mixture was heated with stirring under vacuum at 130°C for one hour to remove traces of water from the monool starter. Propylene oxide (8547 g, 194.2 eq) was introduced into the reactor over 6 hours. After the epoxide addition was completed, the mixture was heated to 130° Cuntil no further pressure decrease occurred. The product was vacuum stripped and then drained from the reactor. The resulting polyether had an OH number of 6.4, an equivalent weight of 8750, a functionality of 1, and an unsaturation of less than meq/g.

### Example 1 - Preparation Cyclic Urea/Reactive Silane Terminated Polyurethane (STP) 1 in situ from a 74:26 diol:monool mixture

A 5 liter round bottom flask was fitted with agitator, nitrogen inlet, condenser, heater and addition funnel. Into the flask were charged 127.9 g (1.15 eq) of isophorone diisocyanate, 2691.6g (0.47 eq) of polyether diol 1, 946.7 g (0.11 eq) of polyether monool 2 and 0.78 g of dibutyltin dilaurate. The reaction was heated to 60°C for 8 hours until the NCO content was 0.58% (theoretical = 0.63%). 202.2g (0.55 eq) of silane functional aspartate 1 were added and the flask was heated at 60°C for an additional 1 hour until no NCO remained as determined by an IR spectrum. 19.9 g of glacial acetic acid were added and the temperature was raised to 110°C. The reaction mixture was held at 110°C for three hours until an IR spectrum showed the urea peak had disappeared and a cyclic urea peak had appeared. 19.8 g of vinyl trimethoxysilane were added as moisture scavenger; and 9.9 g of butylated hydroxy toluene and 6.1 g of Naugard 445 (available from Crompton) were added as antioxidants. The resulting product had a viscosity of 54,000 mPa.s at 25°C.

### Comparative Example 2 - Preparation of Non-Cyclic Urea/Reactive Silane Terminated Polyurethane (STP) 2 in situ from a 74:26 diol:monool mixture

A 3 liter round bottom flask was fitted with agitator, nitrogen inlet, condenser, heater and addition funnel. Into the flask were charged 80.0 g (0.72 eq) of isophorone diisocyanate, 1680.4 g (0.31 eq) of polyether diol 1, 591.7 g (0.07 eq) of polyether monool 2 and 0.53 g of dibutyltin dilaurate. The reaction was heated to 60°C for 8 hours until the NCO content was 0.60% (theoretical = 0.62%). 126.4 g (0.34 eq) of silane functional aspartate 1 were added and the flask was heated at 60°C for an additional 1 hour until no NCO remained as determined by an IR spectrum. 5.5 g of vinyl trimethoxysilane were added as moisture scavenger; and 6.2 g of butylated hydroxy toluene and 3.7 g Naugard 445 (available from Crompton) were added as antioxidants. The resulting product had a viscosity of 34,700 mPa.s at 25°C.

### Heat Aging of Silanes

Into unlined steel cans were placed 300 g of silane. Four cans of each resin were placed into a 90°C oven. One can of each resin was removed each week and the viscosities were determined. The following table sets forth the change in viscosity over the testing period.

| Resin | Viscosity profile, cps @ 90°C | | | | |
|---|---|---|---|---|---|
| | Initial | 1 week | 2 weeks | 3 weeks | 4 weeks |
| STP 1 | 421 | 454 | 505 | 449 | 551 |
| STP 2 (Comparison) | 541 | 448 | 210 | --- | 194 |

### Formulation of Silane Sealants

The STP's were formulated into sealants using the following typical formulation and procedure. The difunctional STP's were formulated alone and in combination with the monofunctional STP's to demonstrate the effects of these combinations.

### Procedure

The following is the standard sealant/adhesive formulation and procedure used to formulate all diol and diol/monool blends. Values given for each formula component are percent by weight of the total formula weight. A high-speed centrifugal mixer was used to mix the formulation components in the steps given below. Each mixing period was one minute in length at a speed of 2200 rpm.

### Step 1:

To a clean dry mixing container were charged the following:

| | |
|---|---|
| STP (blend) | 37.5 |
| Plasticizer | 17.5 |
| Adhesion Promoter | 0.8 |
| Catalyst | 0.1 |
| Desiccant | 0.5 |

The ingredients were mixed for one minute in length at a speed of 2200 rpm.

### Step 2:

A portion of the filler was added to the mixing container.

| | |
|---|---|
| Filler | 23.6 |

The ingredients were mixed for one minute at a speed of 2200 rpm.

### Step 3:

The remaining filler was added to the mixing container.

| | |
|---|---|
| Filler | 20.0 |

The ingredients were mixed for one minute in length at a speed of 2200 rpm.

### Step 4:

The side of the mix container was scraped and the ingredients were mixed for one additional minute at a speed of 2200 rpm to incorporate all of the filler into the mixture.

### Step 5:

The resulting product was degassed at 50°C and under full vacuum (>28 mm Hg) for one hour. The material was used immediately.

Exxon Jayflex DIDP was used as the plasticizer. An aminosilane (Silquest A-1120, available from OSI Corporation) was used as the adhesion promoter. A vinyltrimethoxysilane (Silquest A-171, available from OSI Corporation) was used as the desiccant. The filler used was Specialty Minerals Ultra P Flex precipitated calcium carbonate (mean particle size of 0.07 microns). The catalyst used was dibutyltin dilaurate.

### Cure and Testing of Silane Sealants

The sealant formulations were cast onto 0.25 inch thick polyethylene sheets and cured at standard conditions of 20°C, 50% relative humidity for at least two weeks before testing. Tensile strength, percent elongation and 100% modulus were determined according to ASTM D-412. Die "C" tear strengths were determined according to ASTM D-624. The results are set forth in the following table.

### Examples 3-12: Tensile Properties for sealants prepared from STP 1 and Comparitive STP 2

| Example | | Percent Elongation (%) | Tensile Strength (psi) | 100% Modulus (psi) | Tear Strength (pli) |
|---|---|---|---|---|---|
| | Cyclic Urea STP 1 | | | | |
| 3 | Initial (No Heat) | 244 | 309 | 179 | 31 |
| 4 | 1 Wk @ 70C | 259 | 356 | 187 | 31 |
| 5 | 1 Wk @ 90C | 256 | 319 | 178 | 32 |
| 6 | 4 Wks @ 70C | 265 | 342 | 177 | 34 |
| 7 | 4 Wks @ 90C | 288 | 312 | 171 | 32 |
| | | | | | |

| | | Percent Elongation (%) | Tensile Strength (psi) | 100% Modulus (psi) | Tear Strength (pli) |
|---|---|---|---|---|---|
| | Urea STP 2 | | | | |
| 8 | Initial (No Heat) | 379 | 311 | 144 | 28 |
| 9 | 1 Wk @ 70C | 221 | 78 | 46 | 7 |
| 10 | 1 Wk @ 90C | 10 | 10 | 10 | 5 |
| 11 | 4 Wks @ 70C | 98 | 44 | 39 | 11 |
| 12 | 4 Wks @ 90C | 10 | 10 | 10 | 5 |

The sealant properties of the preceding examples demonstrate that the polyether urethanes containing terminal cyclic urea/reactive silane groups according to the invention are more heat stable than the comparitive polyether urethanes containing terminal non-cyclic urea/reactive silane groups.

## Claims

1. A moisture-curable, polyether urethane having terminal cyclic urea/reactive silane groups and comprising
a) 20 to 100% by weight, based on the weight of a) and b), of a polyether urethane containing two or more terminal cyclic urea/reactive silane groups and one or more polyether segments, wherein the polyether segments have a number average molecular weight of at least 3000 and a degree of unsaturation of less than 0.04 milliequivalents/g, provided that the sum of the number average molecular weights of all of the polyether segments per molecule averages 6000 to 20,000, and wherein the terminal cyclic urea/reactive silane groups correspond to formula VIII and/or IX 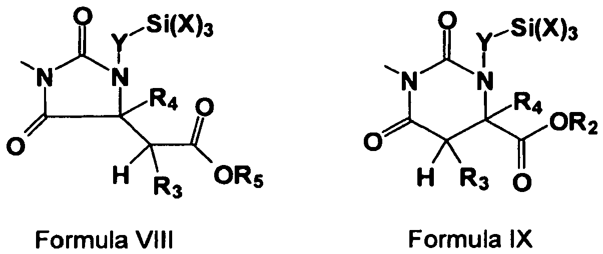 wherein
X represents identical or different organic groups which are inert to isocyanate groups below 100°C, provided that at least two of these groups are alkoxy or acyloxy groups,
Y represents a linear or branched alkylene group containing 1 to 8 carbon atoms,
R₂ and R₅ are identical or different and represent organic groups which are inert to isocyanate groups at a temperature of 100°C or less and
R₃ and R₄ are identical or different and represent hydrogen or organic groups which are inert towards isocyanate groups at a temperature of 100°C or less, and
b) 0 to 80% by weight, based on the weight of a) and b), of a polyether urethane containing one reactive silane group and one or more polyether segments having a number average molecular weight of 1000 to 15,000.

2. The polyether urethane of Claim 1 wherein
X represents identical or different alkoxy groups having 1 to 4 carbon atoms,
Y represents a linear alkylene group containing 2 to 4 carbon atoms or a branched alkylene group containing 5 to 6 carbon atoms,
R₂ and R₅ are identical or different and represent alkyl groups having 1 to 4 carbon atoms and
R₃ and R₄ represent hydrogen.

3. The polyether urethane of Claim 1 wherein the reactive silane group of component b) comprises a terminal cyclic urea/reactive silane group corresponding to formula VIII or IX.

4. The polyether urethane of Claim 2 wherein the reactive silane group of component b) comprises a terminal cyclic urea/reactive silane group corresponding to formula VIII or IX.

5. The polyether urethane of Claim 1 wherein polyether urethane a) is present in an amount of 20 to 90% by weight and polyether urethane b) is present in an amount of 10 to 80% by weight, wherein the percentages are based on the weight of a) and b).

6. The polyether urethane of Claim 2 wherein polyether urethane a) is present in an amount of 20 to 90% by weight and polyether urethane b) is present in an amount of 10 to 80% by weight, wherein the percentages are based on the weight of a) and b).

7. The polyether urethane of Claim 3 wherein polyether urethane a) is present in an amount of 20 to 90% by weight and polyether urethane b) is present in an amount of 10 to 80% by weight, wherein the percentages are based on the weight of a) and b).

8. The polyether urethane of Claim 4 wherein polyether urethane a) is present in an amount of 20 to 90% by weight and polyether urethane b) is present in an amount of 10 to 80% by weight, wherein the percentages are based on the weight of a) and b).

9. The polyether urethane of Claim 1 wherein polyether urethane a) is present in an amount of 30 to 80% by weight and polyether urethane b) is present in an amount of 20 to 70% by weight, wherein the percentages are based on the weight of a) and b).

10. The polyether urethane of Claim 2 wherein polyether urethane a) is present in an amount of 30 to 80% by weight and polyether urethane b) is present in an amount of 20 to 70% by weight, wherein the percentages are based on the weight of a) and b).

11. The polyether urethane of Claim 3 wherein polyether urethane a) is present in an amount of 30 to 80% by weight and polyether urethane b) is present in an amount of 20 to 70% by weight, wherein the percentages are based on the weight of a) and b).

12. The polyether urethane of Claim 4 wherein polyether urethane a) is present in an amount of 30 to 80% by weight and polyether urethane b) is present in an amount of 20 to 70% by weight, wherein the percentages are based on the weight of a) and b).

13. The polyether urethane of Claim 1 wherein the polyether segments of polyether urethane a) have a number average molecular weight of at least 6000 and the polyether segments of component b) have a number average molecular weight of 3000 to 12,000.

14. The polyether urethane of Claim 2 wherein the polyether segments of polyether urethane a) have a number average molecular weight of at least 6000 and the polyether segments of component b) have a number average molecular weight of 3000 to 12,000.

15. The polyether urethane of Claim 3 wherein the polyether segments of polyether urethane a) have a number average molecular weight of at least 6000 and the polyether segments of component b) have a number average molecular weight of 3000 to 12,000.

16. The polyether urethane of Claim 4 wherein the polyether segments of polyether urethane a) have a number average molecular weight of at least 6000 and the polyether segments of component b) have a number average molecular weight of 3000 to 12,000.

17. The polyether urethane of Claim 5 wherein the polyether segments of polyether urethane a) have a number average molecular weight of at least 6000 and the polyether segments of component b) have a number average molecular weight of 3000 to 12,000.

18. The polyether urethane of Claim 6 wherein the polyether segments of polyether urethane a) have a number average molecular weight of at least 6000 and the polyether segments of component b) have a number average molecular weight of 3000 to 12,000.

19. The polyether urethane of Claim 7 wherein the polyether segments of polyether urethane a) have a number average molecular weight of at least 6000 and the polyether segments of component b) have a number average molecular weight of 3000 to 12,000.

20. The polyether urethane of Claim 8 wherein the polyether segments of polyether urethane a) have a number average molecular weight of at least 6000 and the polyether segments of component b) have a number average molecular weight of 3000 to 12,000.

21. The polyether urethane of Claim 9 wherein the polyether segments of polyether urethane a) have a number average molecular weight of at least 6000 and the polyether segments of component b) have a number average molecular weight of 3000 to 12,000.

22. The polyether urethane of Claim 10 wherein the polyether segments of polyether urethane a) have a number average molecular weight of at least 6000 and the polyether segments of component b) have a number average molecular weight of 3000 to 12,000.

23. The polyether urethane of Claim 11 wherein the polyether segments of polyether urethane a) have a number average molecular weight of at least 6000 and the polyether segments of component b) have a number average molecular weight of 3000 to 12,000.

24. The polyether urethane of Claim 12 wherein the polyether segments of polyether urethane a) have a number average molecular weight of at least 6000 and the polyether segments of component b) have a number average molecular weight of 3000 to 12,000.

25. A sealant, adhesive or coating composition containing the moisture-curable, alkoxysilane-functional polyether urethane of Claim 1.

## Patentansprüche

1. Feuchtigkeitshärtbares Polyetherurethan mit endständigen cyclischen Harnstoff-/reaktiven Silangruppen, umfassend
a) 20 bis 100 Gew.-%, bezogen auf das Gewicht von a) und b), eines Polyetherurethans mit zwei oder mehr endständigen cyclischen Harnstoff-/reaktiven Silangruppen und einem oder mehreren Polyethersegmenten, wobei die Polyethersegmente ein zahlenmittleres Molekulargewicht von mindestens 3000 und einen Ungesättigtheitsgrad von weniger als 0,04 Milliäquivalenten/g aufweisen, mit der Maßgabe, dass die Summe der zahlenmittleren Molekulargewichte aller Polyethersegmente pro Molekül durchschnittlich 6000 bis 20.000 beträgt, und wobei die endständigen cyclischen Harnstoff-/reaktiven Silangruppen der Formel VIII und/oder IX entsprechen: 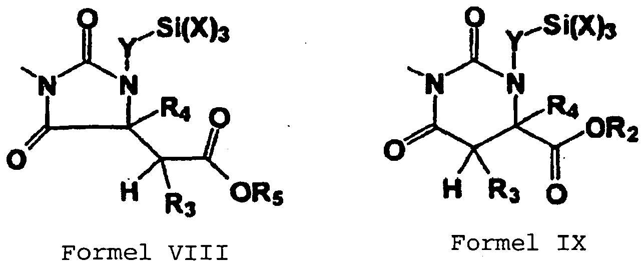 worin
X für gleiche oder verschiedene organische Gruppen, die unter 100°C gegenüber Isocyanatgruppen inert sind, steht, mit der Maßgabe, dass mindestens zwei dieser Gruppen Alkoxy-oder Acyloxygruppen sind,
Y für eine lineare oder verzweigte Alkylengruppe mit 1 bis 8 Kohlenstoffatomen steht, R₂ und R₅ gleich oder verschieden sind und für organische Gruppen, die bei einer Temperatur von 100°C oder weniger gegenüber Isocyanatgruppen inert sind, stehen und R₃ und R₄ gleich oder verschieden sind und für Wasserstoff oder organische Gruppen, die bei einer Temperatur von 100°C oder weniger gegenüber Isocyanatgruppen inert sind, stehen, und
b) 0 bis 80 Gew.-%, bezogen auf das Gewicht von a) und b), eines Polyetherurethans mit einer reaktiven Silangruppe und einem oder mehreren Polyethersegmeten mit einem zahlenmittleren Molekulargewicht von 1000 bis 15.000.

2. Polyetherurethan nach Anspruch 1, wobei
X für gleiche oder verschiedene Alkoxygruppen mit 1 bis 4 Kohlenstoffatomen steht,
Y für eine lineare Alkylengruppe mit 2 bis 4 Kohlenstoffatomen oder eine verzweigte Alkylengruppe mit 5 bis 6 Kohlenstoffatomen steht, R₂ und R₅ gleich oder verschieden sind und für Alyklgruppen mit 1 bis 4 Kohlenstoffatomen stehen und R₃ und R₄ für Wasserstoff stehen.

3. Polyetherurethan nach Anspruch 1, wobei die reaktive Silangruppe von Komponente b) eine endständige cyclische Harnstoff-/reaktive Silangruppe der Formel VIII oder IX umfasst.

4. Polyetherurethan nach Anspruch 2, wobei die reaktive Silangruppe von Komponente b) eine endständige cyclische Harnstoff-/reaktive Silangruppe der Formel VIII oder IX umfasst.

5. Polyetherurethan nach Anspruch 1, wobei das Polyetherurethan a) in einer Menge von 20 bis 90 Gew.-% vorliegt und das Polyetherurethan b) in einer Menge von 10 bis 80 Gew.-% vorliegt, wobei sich die Prozentangaben auf das Gewicht von a) und b) beziehen.

6. Polyetherurethan nach Anspruch 2, wobei das Polyetherurethan a) in einer Menge von 20 bis 90 Gew.-% vorliegt und das Polyetherurethan b) in einer Menge von 10 bis 80 Gew.-% vorliegt, wobei sich die Prozentangaben auf das Gewicht von a) und b) beziehen.

7. Polyetherurethan nach Anspruch 3, wobei das Polyetherurethan a) in einer Menge von 20 bis 90 Gew.-% vorliegt und das Polyetherurethan b) in einer Menge von 10 bis 80 Gew.-% vorliegt, wobei sich die Prozentangaben auf das Gewicht von a) und b) beziehen.

8. Polyetherurethan nach Anspruch 4, wobei das Polyetherurethan a) in einer Menge von 20 bis 90 Gew.-% vorliegt und das Polyetherurethan b) in einer Menge von 10 bis 80 Gew.-% vorliegt, wobei sich die Prozentangaben auf das Gewicht von a) und b) beziehen.

9. Polyetherurethan nach Anspruch 1, wobei das Polyetherurethan a) in einer Menge von 30 bis 80 Gew.-% vorliegt und das Polyetherurethan b) in einer Menge von 20 bis 70 Gew.-% vorliegt, wobei sich die Prozentangaben auf das Gewicht von a) und b) beziehen.

10. Polyetherurethan nach Anspruch 2, wobei das Polyetherurethan a) in einer Menge von 30 bis 80 Gew.-% vorliegt und das Polyetherurethan b) in einer Menge von 20 bis 70 Gew.-% vorliegt, wobei sich die Prozentangaben auf das Gewicht von a) und b) beziehen.

11. Polyetherurethan nach Anspruch 3, wobei das Polyetherurethan a) in einer Menge von 30 bis 80 Gew.-% vorliegt und das Polyetherurethan b) in einer Menge von 20 bis 70 Gew.-% vorliegt, wobei sich die Prozentangaben auf das Gewicht von a) und b) beziehen.

12. Polyetherurethan nach Anspruch 4, wobei das Polyetherurethan a) in einer Menge von 30 bis 80 Gew.-% vorliegt und das Polyetherurethan b) in einer Menge von 20 bis 70 Gew.-% vorliegt, wobei sich die Prozentangaben auf das Gewicht von a) und b) beziehen.

13. Polyetherurethan nach Anspruch 1, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

14. Polyetherurethan nach Anspruch 2, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

15. Polyetherurethan nach Anspruch 3, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

16. Polyetherurethan nach Anspruch 4, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

17. Polyetherurethan nach Anspruch 5, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

18. Polyetherurethan nach Anspruch 6, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

19. Polyetherurethan nach Anspruch 7, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

20. Polyetherurethan nach Anspruch 8, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

21. Polyetherurethan nach Anspruch 9, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

22. Polyetherurethan nach Anspruch 10, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

23. Polyetherurethan nach Anspruch 11, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

24. Polyetherurethan nach Anspruch 12, wobei die Polyethersegmente von Polyetherurethan a) ein zahlenmittleres Molekulargewicht von mindestens 6000 aufweisen und die Polyethersegmente von Komponente b) ein zahlenmittleres Molekulargewicht von 3000 bis 12.000 aufweisen.

25. Dichtstoff-, Klebstoff- oder Beschichtungszusammensetzung, die das feuchtigkeitshärtbare alkoxysilanfunktionelle Polyetherurethan gemäß Anspruch 1 enthält.

## Revendications

1. Uréthane de polyéther durcissable à l'humidité ayant des groupes terminaux urée cyclique/silane réactif et comprenant
a) 20 à 100 % en poids, sur la base du poids de a) et b), d'un uréthane de polyéther contenant deux ou plus de deux groupes terminaux urée cyclique/silane réactif et un ou plusieurs segments de polyéther, dans lequel les segments de polyéther ont une masse moléculaire moyenne en nombre d'au moins 3 000 et un degré d'insaturation inférieur à 0,04 milliéquivalent/g, à condition que la somme des masses moléculaires moyennes en nombre de tous les segments de polyéther dans une molécule soit en moyenne de 6 000 à 20 000, et dans lequel les groupes terminaux urée cyclique/silane réactif correspondent aux formules VIII et/ou IX 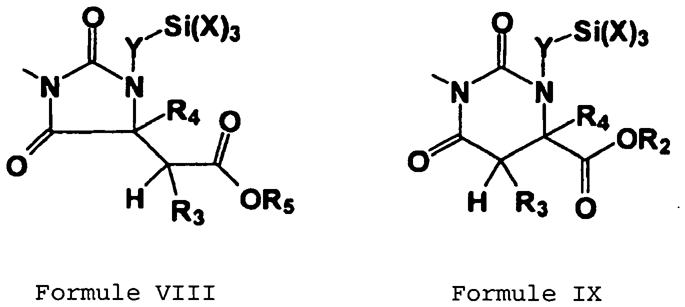 dans lesquelles
X représente des groupes organiques identiques ou différents qui sont inertes vis-à-vis de groupes isocyanates au-dessous de 100°C, à condition qu'au moins deux de ces groupes soient des groupes alcoxy ou acyloxy,
Y représente un groupe alkylène linéaire ou ramifié contenant 1 à 8 atomes de carbone,
R₂ et R₅ sont identiques ou différents et représentent des groupes organiques qui sont inertes vis-à-vis de groupes isocyanates à une température inférieure ou égale à 100°C et
R₃ et R₄ sont identiques ou différents et représentent l'hydrogène ou des groupes organiques qui sont inertes vis-à-vis de groupes isocyanates à une température inférieure ou égale à 100°C et
b) 0 à 80 % en poids, sur la base du poids de a) et b), d'un uréthane de polyéther contenant un groupe silane réactif et un ou plusieurs segments de polyéther ayant une masse moléculaire moyenne en nombre de 1 000 à 15 000.

2. Uréthane de polyéther selon la Revendication
1 dans lequel
X représente des groupes alcoxy identiques ou différents ayant 1 à 4 atomes de carbone,
Y représente un groupe alkylène linéaire contenant 2 à 4 atomes de carbone ou un groupe alkylène ramifié contenant 5 à 6 atomes de carbone,
R₂ et R₅ sont identiques ou différents et représentent des groupes alkyles ayant 1 à 4 atomes de carbone et
R₃ et R₄ représentent l'hydrogène.

3. Uréthane de polyéther selon la Revendication 1 dans lequel le groupe silane réactif du composant b) comprend un groupe terminal urée cyclique/silane réactif correspondant à la formule VIII ou IX.

4. Uréthane de polyéther selon la Revendication 2 dans lequel le groupe silane réactif du composant b) comprend un groupe terminal urée cyclique/silane réactif correspondant à la formule VIII ou IX.

5. Uréthane de polyéther selon la Revendication 1 dans lequel l'uréthane de polyéther a) est présent en une quantité de 20 à 90 % en poids et l'uréthane de polyéther b) est présent en une quantité de 10 à 80 % en poids, les pourcentages étant basés sur le poids de a) et b).

6. Uréthane de polyéther selon la Revendication 2 dans lequel l'uréthane de polyéther a) est présent en une quantité de 20 à 90 % en poids et l'uréthane de polyéther b) est présent en une quantité de 10 à 80 % en poids, les pourcentages étant basés sur le poids de a) et b).

7. Uréthane de polyéther selon la Revendication 3 dans lequel l'uréthane de polyéther a) est présent en une quantité de 20 à 90 % en poids et l'uréthane de polyéther b) est présent en une quantité de 10 à 80 % en poids, les pourcentages étant basés sur le poids de a) et b).

8. Uréthane de polyéther selon la Revendication 4 dans lequel l'uréthane de polyéther a) est présent en une quantité de 20 à 90 % en poids et l'uréthane de polyéther b) est présent en une quantité de 10 à 80 % en poids, les pourcentages étant basés sur le poids de a) et b).

9. Uréthane de polyéther selon la Revendication 1 dans lequel l'uréthane de polyéther a) est présent en une quantité de 30 à 80 % en poids et l'uréthane de polyéther b) est présent en une quantité de 20 à 70 % en poids, les pourcentages étant basés sur le poids de a) et b).

10. Uréthane de polyéther selon la Revendication 2 dans lequel l'uréthane de polyéther a) est présent en une quantité de 30 à 80 % en poids et l'uréthane de polyéther b) est présent en une quantité de 20 à 70 % en poids, les pourcentages étant basés sur le poids de a) et b).

11. Uréthane de polyéther selon la Revendication 3 dans lequel l'uréthane de polyéther a) est présent en une quantité de 30 à 80 % en poids et l'uréthane de polyéther b) est présent en une quantité de 20 à 70 % en poids, les pourcentages étant basés sur le poids de a) et b).

12. Uréthane de polyéther selon la Revendication 4 dans lequel l'uréthane de polyéther a) est présent en une quantité de 30 à 80 % en poids et l'uréthane de polyéther b) est présent en une quantité de 20 à 70 % en poids, les pourcentages étant basés sur le poids de a) et b).

13. Uréthane de polyéther selon la Revendication 1 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

14. Uréthane de polyéther selon la Revendication 2 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

15. Uréthane de polyéther selon la Revendication 3 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

16. Uréthane de polyéther selon la Revendication 4 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

17. Uréthane de polyéther selon la Revendication 5 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

18. Uréthane de polyéther selon la Revendication 6 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

19. Uréthane de polyéther selon la Revendication 7 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

20. Uréthane de polyéther selon la Revendication 8 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

21. Uréthane de polyéther selon la Revendication 9 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

22. Uréthane de polyéther selon la Revendication 10 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

23. Uréthane de polyéther selon la Revendication 11 dans lequel les segments de polyéther de l'uréthane de polyéther a) ont une masse moléculaire moyenne en nombre d'au moins 6 000 et les segments de polyéther du composant b) ont une masse moléculaire moyenne en nombre de 3 000 à 12 000.

24. Uréthane de polyéther selon la Revendication 12 dans lequel les segments de polyéther de l'uréthane de polyéther a) ont une masse moléculaire moyenne en nombre d_{'}au moins 6 000 et les segments de polyéther du composant b) ont une masse moléculaire moyenne en nombre de 3 000 à 12 000.

25. Composition de produit d'étanchéité, d'adhésif ou de revêtement contenant l'uréthane de polyéther à fonctionnalité alcoxysilane durcissable à l'humidité selon la Revendication 1.
